# DEMANDE DE BREVET EUROPEEN

(11) **EP 0 695 009 A1**
(43) Date de publication de la demande: **31.01.1996**
(21) Numéro de dépôt: 95420221.4
(22) Date de dépôt: 26.07.1995
(51) Int. Cl.: H02G 3/06

(54) **Eclisse pour chemins de câbles**

(30) Priorité: 29.07.1994 FR 9409457
(71) Demandeur: KRIEG & ZIVY INDUSTRIES, F-92100 Boulogne-Billancourt (FR)
(72) Inventeur: Chanel, Lucien, F-60700 Pont-Ste-Maxence (FR); Boltz, Roland, F-60190 Estrees St. Denis (FR)
(74) Mandataire: Desolneux, Jean-Paul Charles

(57) **Abrégé**

Il s'agit d'une éclisse (20) qui, en coopération avec une autre, est propre à la réunion de deux tronçons de chemin de câbles présentant de place en place des perforations.

Suivant l'invention, cette éclisse, de profil en équerre, comporte, d'une part, sous une première aile (21), des pattes d'ancrage (25) agencées de manière à coopérer avec des perforations (13) desdits tronçons lorsque ladite éclisse est appliquée contre lesdits tronçons, et, d'autre part, sur le bord libre (28) d'une seconde aile (22), une ailette élastique (30) adaptée à prendre appui sur un rebord rabattu (14) du flanc (12) du chemin de câble, pour exercer sur l'éclisse une action permettant le verrouillage desdites pattes d'ancrage dans lesdites perforations.

Application, notamment, aux chemins de câbles en tôle.

## Description

La présente invention concerne d'une manière générale les chemins de câbles et elle vise plus particulièrement ceux de ces chemins de câbles qui, de profil en U, sont réalisés en tôle et présentent de place en place des perforations.

Ainsi qu'on le sait, ces chemins de câbles sont usuellement établis tronçon par tronçon, et il convient de convenablement solidariser l'un à l'autre leurs tronçons successifs.

Pour ce faire, il est usuellement mis en oeuvre des éclisses rigides, qui sont adaptées à être fixées contre le chemin de câble, dans la zone où deux tronçons sont accolés

La présente invention concerne plus particulièrement les éclisses de profil en équerre formant cornières dont les ailes sont fixées contre respectivement le fond et l'un des flanc latéral du chemin de câble. Ces éclisses formant cornières peuvent être extérieures ou intérieures, c'est à dire disposées contre les faces respectivement extérieure et intérieure du fond et du flanc du chemin de câble.

A ce jour, la fixation de ces éclisses se fait généralement par boulonnage. Les opérations de fixation sont donc longues et malaisées à exécuter, notamment lorsque le chemin de câbles concerné est installé en hauteur, par exemple à proximité d'un plafond. Elles nécessitent en outre de disposer d'une fourniture supplémentaire, à savoir un lot suffisant d'ensemble vis-écrou, ainsi que d'un outil adapté.

Il est donc recherché un dispositif de fixation des éclisses simple à mettre en oeuvre et permettant, pour l'assemblage des éclisses sur les tronçons de chemin de câbles, de se passer d'outillage particulier.

Le brevet FR2606843 propose un dispositif de raccordement constitué par une éclisse en forme de cornière dont une aile, de même hauteur que le flanc latéral du chemin de câble, est adaptée à être accrochée pivotante sur ce dernier, au niveau de leurs bords supérieurs libres, la seconde aile comportant des pattes déformables élastiquement. Lorsque la première aile est amenée, par pivotement autour de son bord libre, contre le flanc latéral du chemin de câble, les pattes vont s'installer dans des perforations du fond du chemin de câble, verrouillant ainsi l'éclisse qui ne peut plus pivoter et, par conséquent, est fixée sur le chemin de câble.

Cette disposition n'assure pas un parfait assujettissement de l'éclisse sur le chemin de câble.

Il est également proposé dans ce brevet FR2606843, afin d'assurer une application intime des éclisses contre les faces en regard des tronçons à rabouter, de donner à l'angle formé par les ailes de l'éclisse une valeur différente de 90°, inférieure dans le cas des éclisses formant cornières extérieures et supérieure dans le cas de celles formant cornières intérieures.

Or, la déformation élastique de l'ouverture des ailes de l'éclisse crée des contraintes au niveau de la jonction entre les ailes, ce qui nuit aux caractéristiques mécaniques de l'éclisse.

En outre, l'installation d'une telle éclisse est difficile, puisqu'il faut tout à la fois la faire pivoter autour de son bord supérieur et la déformer au niveau de la jonction entre ailes. Etant donné que la seconde aile, que l'opérateur doit contraindre à s'installer contre le fond du chemin de câble, est généralement de petite taille, l'effort devant être fourni pour la mise en place de l'éclisse peut être relativement important.

La présente invention a notamment pour objet une disposition permettant d'éviter ces inconvénients.

A cet effet est proposée une éclisse de profil en équerre pour réunir deux tronçons de chemin de câbles de profil en U présentant de place en place des perforations, une première aile et une seconde aile de cette éclisse étant destinées à être appliquées contre respectivement le fond et un flanc du profilé formé par lesdits tronçons mis bout à bout, ladite éclisse étant caractérisée en ce qu'elle comporte, d'une part, sur ladite seconde aile, au moins un moyen élastique adapté à prendre appui sur ledit flanc lorsque cette seconde aile est amenée contre ce dernier, pour solliciter l'éclisse sensiblement en pivotement autour du bord libre de ladite seconde aile, et d'autre part, sur la première aile, des moyens d'ancrage agencés de manière à coopérer avec des perforations desdits tronçons lorsque lesdites première et seconde ailes de l'éclisse sont appliquées contre respectivement ledit fond et ledit flanc.

Lorsque cette éclisse est en place sur les tronçons correspondants du chemin de câbles, les moyens d'ancrage vont empêcher le pivotement de l'éclisse qui est ainsi immobilisée. Quant à l'effort exercé par le moyen élastique, qui tend à faire pivoter l'éclisse, il va solliciter les moyens d'ancrage contre les bords des perforations, donnant lieu à un assujettissement intime de l'éclisse sur les tronçons de chemin de câbles à raccorder.

Cet assujettissement est obtenu sans déformation notable du corps principal de l'éclisse, à savoir les deux ailes de cette dernière.

Avantageusement, le moyen élastique interviendra à proximité du bord libre de la seconde aile. La seconde aile de l'éclisse étant généralement de grande taille, l'opérateur, en manipulant l'éclisse par l'intermédiaire de sa première aile, bénéficie d'un effet de levier favorable pour déformer ce moyen élastique. La déformation du moyen élastique est ainsi aisément réalisée.

Le moyen élastique peut être constitué par des pattes déformables élastiquement, d'inclinaison différente de celle de la seconde aile. Par exemple, il peut s'agir de deux pattes intervenant à égale distance de part et d'autre de la jonction entre les deux tronçons.

Ce moyen élastique peut également être une ailette déformable élastiquement, ladite ailette prolongeant vers le haut au moins une partie centrale de la seconde aile de l'éclisse, avec une certaine inclinaison par rapport à cette dernière. Une telle ailette est adaptée à prendre appui à l'intérieur de rebords en forme de crosse qui s'étendent le long des bords libres des flancs latéraux des tronçons.

Les chemins de câbles existants à ce jour sont fréquemment pourvus de tels rebords en forme de crosse, généralement obtenus en rabattant vers le fond l'extrémité supérieure des flancs. Ainsi, une éclisse selon cet aspect de la présente invention peut être mise en oeuvre pour le raccordement de tronçons de chemins de câbles existants à ce jour, sans modifications de ces derniers.

L'ailette est insérée dans les rebords des flancs correspondants de deux tronçons à raccorder. Cette ailette s'étendant de manière continue dans une partie centrale de l'éclisse, l'effort élastique qu'elle exerce est réparti de manière favorable, notamment en ce qui concerne le risque de rupture de l'éclisse en son centre.

En outre, s'étendant au niveau de la jonction des deux tronçons, elle permet à l'éclisse d'assurer au mieux sa fonction de lien de continuité mécanique entre lesdits tronçons.

Une éclisse selon la présente invention peut être intérieure ou extérieure. Dans le premier cas, le moyen élastique sollicitera l'éclisse en pivotement vers l'intérieur du chemin de câble et les moyens d'ancrage s'étendront vers le bas afin de pénétrer les perforations du chemin de câble de haut en bas. Dans le second cas, le moyen élastique sollicitera l'éclisse en pivotement vers l'extérieur du chemin de câble et les moyens d'ancrage s'étendront vers le haut afin de pénétrer les perforations du chemin de câble de bas en haut.

Lorsque les flancs des tronçons à raccorder sont pourvus de rebords rabattus vers l'intérieur, sera avantageusement mise en oeuvre une éclisse intérieure munie d'une ailette inclinée vers l'intérieur, cette dernière étant ainsi adaptée à prendre appui sur la partie rabattue desdits rebords. A l'inverse, lorsque des tronçons à raccorder sont pourvus de rebords rabattus vers l'extérieur, sera avantageusement mise en oeuvre un éclisse extérieure munie d'une ailette inclinée vers l'extérieure, cette dernière étant ainsi adaptée à prendre appui sur la partie rabattue desdits rebords.

Les caractéristiques et avantages de l'invention ressortiront d'ailleurs de la description qui va suivre, à titre d'exemple, en référence aux dessins annexés parmi lesquels:
la figure 1 est une vue partielle en perspective montrant deux tronçons de chemin de câble et une éclisse selon la présente invention,
la figure 2 est une vue partielle en élévation suivant la direction II d'un tronçon de la figure 2 sur lequel a été assemblé l'éclisse,
la figure 3 est une vue en coupe III-III de l'assemblage de la figure 2.

Tel qu'illustré sur ces figures, il s'agit, globalement, de relier l'un à l'autre, en les solidarisant l'un à l'autre, deux tronçons successifs 10A,10B de chemin de câbles, de même type, disposés bout à bout.

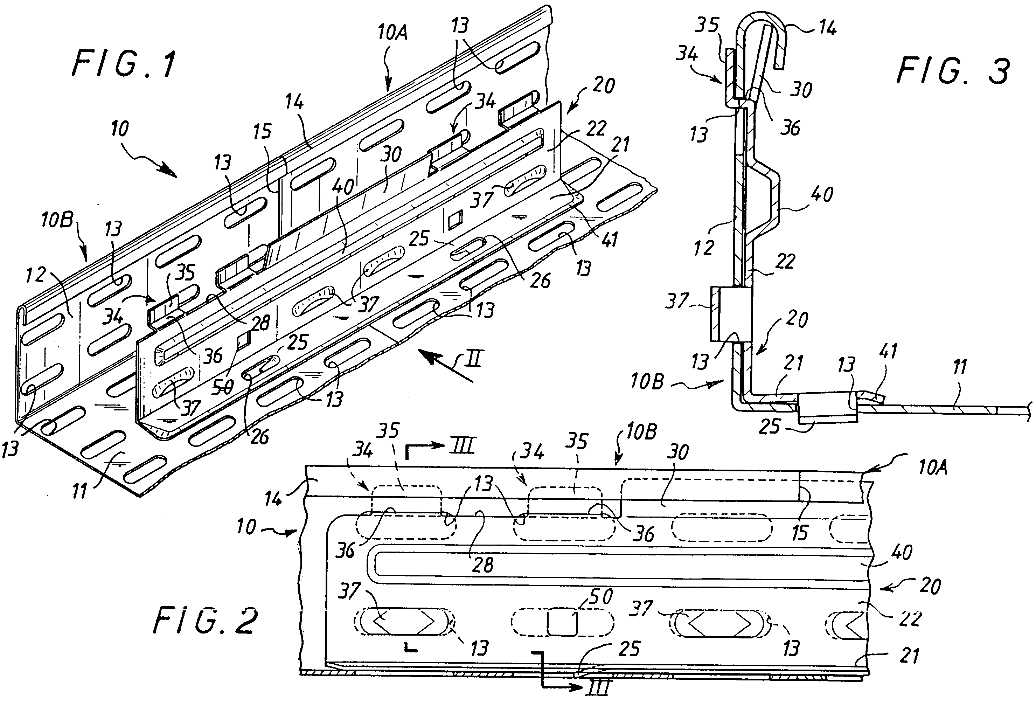

Ces tronçons de chemin de câbles, de type connu, ont, transversalement, un profil en U, et ils présentent, de place en place, suivant un réseau régulier, tant sur leur fond que sur leurs flancs latéraux, des perforations 13, qui, en pratique, sont allongées en boutonnière. Dans la représentation des figures 1 à 3, les flancs latéraux de l'éclisse sont pourvues de deux rangées de telles perforations.

Chacun des flancs latéraux de ces tronçons présente, le long de son bord libre, un rebord en forme de crosse 14, en saillie sur sa surface interne. Ce rebord 14 est formé en pratique en rabattant vers l'intérieur du tronçon une portion supérieure du flanc latéral, de sorte que son extrémité s'étende vers le fond 11.

En pratique, les deux tronçons de chemin de câbles ainsi constitués sont en tôle.

Pour relier deux tronçons de ce type, il est mis en oeuvre deux éclisses 20, identiques, qui s'étendent de l'un à l'autre de ces tronçons, adossées à respectivement l'un et l'autre flancs latéraux du profilé 10 formé par ces tronçons mis bout à bout.

Avantageusement, chacune de ces éclisses s'étend symétriquement de part et d'autre de la jonction 15 entre les tronçons 10A et 10B.

Les deux éclisses 20 étant identiques, il suffira de décrire l'une d'entre elles, représentée aux figures 1 à 3.

Comme on le voit bien sur la figure 1, cette éclisse est un profilé à deux ailes en équerre, de type cornière, une première aile 21 de cette éclisse étant destinée à être appliquée contre le fond 11 du profilé 10, une seconde aile 22 étant destinée à être appliquée contre un flanc 12 de ce profilé 10.

Une telle éclisse est avantageusement réalisée par découpage et pliage d'une plaque de tôle.

L'éclisse 20 ici décrite à titre d'exemple est une éclisse intérieure, c'est à dire qu'elle est adaptée à être disposée contre les faces intérieures du fond 11 et du flanc 12.

Dans ce mode de réalisation de la présente invention la seconde aile est de hauteur inférieure à celle des flancs du profilé 10. Avantageusement, en outre, cette seconde aile 22 est plus grande que la première aile 21.

L'éclisse 20 comporte, en saillie sous la première aile 21, au moins deux pattes de verrouillage 25, qui, longitudinalement espacées l'une de l'autre, sont destinées à coopérer chacune respectivement avec les deux tronçons 10A et 10B à réunir.

Comme on le voit sur les figures 1 à 3, chacune de ces pattes s'étend dans un plan sensiblement perpendiculaire à la deuxième aile 22, avec une certaine inclinaison vers le bas.

Avantageusement, et comme on le voit sur la figure 1, ces deux pattes 25 s'étendent de manière symétrique de part et d'autre du plan transversal médian de l'éclisse.

En pratique, ces pattes sont d'un seul tenant avec l'éclisse 20, étant formées à la faveur de crevés 26 de la première aile 21, comme on le voit bien sur la figure 1.

Comme on le comprendra mieux par la suite, ces pattes 25 forment moyens d'ancrage adaptés à coopérer avec dans des perforations 13 du fond 11 du chemin de câbles. Ainsi, elles sont dimensionnées de manière à pouvoir pénétrer dans ces perforations, et l'espacement longitudinal entre elles est prévu pour qu'elles puissent se trouver toutes deux simultanément en regard de perforations.

L'éclisse 20 comporte également, s'étendant à partir du bord libre 28 de la seconde aile 22, une ailette 30 prolongeant vers le haut, avec une certaine inclinaison, une partie centrale de cette dernière.

Comme on le voit sur la figure 1, cette ailette 30 s'étend dans un plan longitudinal qui, par rapport au plan dans lequel s'étend la seconde aile 22, est incliné vers l'intérieur de l'éclisse 20, c'est à dire vers le côté où s'étend la première aile 21.

Cette ailette 30 est de dimension adaptée à pénétrer, par son extrémité libre, à l'intérieur des rebords 14 du profilé 10. Elle est centrée par rapport à l'éclisse 20 de sorte que, lorsque cette dernière est positionnée sur le profilé 10, ladite ailette intervient symétriquement de part et d'autre de la jonction 15 entre les tronçons 10A et 10B.

En outre, le rapport de sa longueur sur celle de l'éclisse est relativement important. Avantageusement, et comme c'est le cas dans l'exemple représenté, ce rapport est supérieur à 1/3.

En pratique, cette ailette est d'un seul tenant avec l'éclisse 20, étant issue du découpage et du pliage de la plaque de tôle à partir de laquelle est réalisée ladite éclisse.

Comme on le comprendra mieux par la suite, cette ailette 30 forme moyen élastique adapté à prendre appui sur le flanc 12 du profilé 10, par l'intermédiaire de son rebord 14, lorsque la seconde aile 22 de l'éclisse 20 est amenée contre ledit flanc, pour solliciter cette éclisse sensiblement en pivotement autour du bord libre 28 de ladite seconde aile. Dans cet objectif, sa forme et ses dimensions lui autorisent une certaine déformation élastique, permettant notamment la modification de son inclinaison par rapport à la seconde aile 22.

L'éclisse 20 est également pourvue d'un certain nombre de pattes 34 dont une extrémité 35, comme on le voit bien sur les figures 1 et 3, s'étend vers le haut, parallèlement à la seconde aile 22, à partir de l'extrémité d'une racine 36 qui, elle, partant du bord libre 28 de ladite seconde aile, s'étend perpendiculairement à cette dernière, dans la direction opposée à la première aile 21.

Comme on le verra mieux par la suite, ces pattes 34 forment moyens de positionnement de l'éclisse 20 sur le profilé 10. Dans ce but, elles sont adaptées, tant par leurs dimensions que par leur espacement mutuel, à pénétrer dans des perforations 13 de la rangée supérieure du flanc 12.

Dans l'exemple représenté, l'éclisse 20 est munie de quatre de ces pattes 34, disposées deux par deux de chaque côté de l'ailette 30, symétriquement par rapport au plan transversal médian de ladite éclisse.

Ces pattes sont destinées à pénétrer dans les deuxième et troisième perforations 13, à partir du plan de jonction 15, de la rangée supérieure de chacun des tronçons.

Les pattes d'ancrage 25 se trouvant en contrebas de celles des pattes 34 qui sont le plus proches du plan transversal médian, comme on le voit sur la figure 2, l'installation des pattes 34 dans leurs perforations 13 correspondantes assure que les pattes d'ancrage 25 se trouveront en regard des deuxièmes colonnes de perforations, à partir du plan de jonction 15, des tronçons 10A et 10B.

En pratique, ces pattes 34 sont d'un seul tenant avec l'éclisse 20.

Avantageusement, l'éclisse 20 est munie de moyens secondaires de verrouillage constitués chacun par une lamelle 37 découpée dans la seconde aile 22, ses deux extrémités restant solidaires de cette dernière, puis emboutie de manière à faire saillie vers l'extérieur de l'éclisse.

Ces lamelles embouties 37 sont destinées à s'insérer dans des perforations 13 de la rangée inférieure du flanc 12, comme on le voit sur les figures 2 et 3. La hauteur de ces lamelles correspond sensiblement à celle des perforations 13.

Dans l'exemple représenté, quatres lamelles embouties sont formées sur la seconde aile 22. Elles sont destinées à pénétrer les première et troisième perforations, à partir du plan de jonction 15, de la rangée inférieure de chacun des tronçons.

Dans l'exemple représenté, la seconde aile 22 est pourvue sur presque toute sa longueur d'une nervure 40 faisant saillie vers l'intérieur de l'éclisse 20 et réalisée par emboutissage de ladite aile 22.

Avantageusement, et comme représenté aux figures 1 à 3, le bord libre et les bords d'extrémité de la première aile 21 sont pourvus d'une bordure 41 légèrement inclinée vers le bas. Dans ce cas, l'angle que forment les deux ailes de l'éclisse est légèrement inférieur à 90°.

Finalement, l'éclisse 20 est avantageusement pourvue sur sa seconde aile 22 de perçages 50 positionnés de manière à se trouver en regard de perforations 13 du flanc 12 lorsque l'éclisse est installée sur le profilé 10. De tels perçages servent notamment au boulonnage d'une tresse de masse.

Pour sa mise en oeuvre, une éclisse 20 suivant l'invention est approchée du flanc 12 du profilé 10, inclinée par rapport à ce dernier de manière à présenter en avant le bord libre 28, s'étendant parallèlement au bord libre dudit flanc 12.

Les pattes 34 sont insérées dans les perforations 13 correspondantes du profilé 10, et, simultanément, l'ailette 30 est insérée dans le rebord 14.

A ce stade, chacune des pattes d'ancrage 25 se trouve en regard de la seconde colonne de perforations 13, à partir du plan de jonction 15, du tronçon correspondant, et son extrémité est en appui sur la surface supérieure du fond 11, entre la première et la seconde rangée de perforations 13 à partir de l'angle de jonction avec le flanc 12.

En outre, la surface supérieure de la racine 36 de chacune des pattes 34 se trouve en appui sur le bord supérieur de la perforation 13 correspondante.

Enfin, l'extrémité de l'ailette 30 se trouve en appui contre la partie rabattue, s'étendant vers la première aile 21, du rebord 14.

L'opérateur va alors exercer un effort sur la première aile 21 et/ou la partie inférieure de la seconde aile 22 afin de faire pivoter l'éclisse autour du bord libre 28 de ladite seconde aile en vue d'amener cette dernière contre le flanc 12.

Les pattes 25, ainsi que les portions de la première aile 21 et du fond 11 se trouvant aux environs de ces pattes, vont avoir tendance à se déformer élastiquement, de manière à permettre le passage de ces pattes, au fur et à mesure que la première aile 21 se rapproche du fond 11 du profilé 10.

L'appui des racines 36 contre les rebords des perforations assure que l'éclisse n'est pas repoussée vers le haut par l'effort élastique exercé sur la première aile 21 du fait du passage des pattes 25, et que, par conséquent, le mouvement de l'éclisse est bien sensiblement un mouvement de rotation autour du bord libre 28.

L'appui de l'ailette 30 sur le rebord 14 s'oppose à l'effort qu'exerce l'opérateur pour monter l'éclisse. Cet effort va provoquer la déformation élastique de cette ailette qui va alors emmagasiner une certaine énergie élastique.

Lorsque la seconde aile 22 se trouve finalement appliquée contre le flanc 12, les lamelles embouties 37 ayant pénétrées dans les perforations 13 correspondantes de ce dernier, les pattes d'ancrage 25, qui se trouvent alors en regard des perforations correspondantes de la première rangée du fond 11, pénètrent lesdites perforations.

L'énergie élastique emmagasinée par l'ailette 30 au cours du montage ayant tendance à solliciter l'éclisse en pivotement autour du bord libre 28 dans le sens inverse de celui du montage, elle va en conséquent solliciter les pattes 25 contre les bords des perforations 13 correspondantes, assurant un verrouillage très sûr de l'éclisse 20 sur le profilé 10.

Les lamelles embouties 37 et les pattes 34, en prise avec les perforations 13 correspondantes, empêchent toute translation de l'éclisse 20 suivant la hauteur du flanc 12, et, de ce fait, améliorent encore plus la sécurité de ce verrouillage.

Comme on le voit sur la figure 3, lorsque l'éclisse est montée, l'extrémité 35 des pattes 34 s'étend contre la surface extérieure du flanc 12.

Avantageusement, pour démonter une telle éclisse, on utilise un outil à l'aide duquel on déforme plastiquement, une à une, les pattes 25, de manière à les libérer des perforations 13 correspondantes. Il peut s'agir de l'outil décrit dans la demande de brevet FR8912099.

Bien entendu, la présente invention ne se limite pas à la forme de réalisation décrite et représentée, mais englobe toute variante d'exécution.

Notamment, et comme on l'a dit précédemment, la présente invention s'applique également aux éclisses extérieures, c'est à dire celles adaptées à être disposées contre les faces extérieures du fond 11 et du flanc 12.

Dans ce cas, les pattes élastiques feront saillie vers le haut de la première aile, l'ailette sera inclinée vers l'extérieur de l'éclisse et les racines des pattes correspondant aux pattes 34 seront dirigées vers l'intérieur de ladite éclisse. La présence de ces dernières est, dans ce cas, particulièrement importante, car, aucours du montage, l'éclisse sera sollicitée par l'action des pattes élastiques vers le bas. Ces pattes, prenant appui, dans ce cas, sur le bord inférieur de la perforation 13 correspondante, évitera à l'opérateur d'exercer un effort supplémentaire pour contrer cette sollicitation.

L'éclisse extérieure pourra également comporter des lamelles embouties telles que 37, qui feront alors saillie vers l'intérieur, ainsi qu'une nervure telle 40, qui fera alors saillie vers l'extérieur.

La présente invention s'applique également aux éclisses pour chemins de câbles dont les flancs latéraux ne comportent pas de rebords en forme de crosse.

Dans ce cas, le moyen élastique, permettant de solliciter l'éclisse en pivotement autours du bord libre de sa seconde aile, sera avantageusement constitué par des pattes telles que 34 dont les extrémités partant des racines telles que 36 s'étendent, non plus parallèlement à la seconde aile, mais avec une certaine inclinaison vers l'intérieur de l'éclisse.

Ainsi, lorsque, comme décrit précédement, ces pattes sont introduites dans des perforations correspondantes 13 du flanc 12, et l'opérateur fait pivoter l'éclisse afin d'introduire les pattes d'ancrage 25 dans les perforations 13 correspondantes, ces pattes vont prendre appui contre la surface extérieure du flanc 12. Elles vont, par conséquent, emmagasiner de l'énergie élastique.

Bien entendu, les racines de ces pattes, s'appuyant sur les rebords des perforations 13 correspondantes, assurent toujours que l'éclisse pivote bien autour du bord libre de sa seconde aile.

Comme précedement, l'énergie élastique emmagasinée par ces pattes, ayant tendance à solliciter l'éclisse sensiblement en pivotement autour du bord libre de sa seconde aile, va solliciter les pattes d'ancrage 25 contre les bords des perforations 13 correspondantes.

Cet exemple d'éclisse suivant la présente invention peut convenir à plusieurs types de chemins de câbles, dont les flancs latéraux sont de différentes hauteurs.

## Revendications

1. Eclisse de profil en équerre pour réunir deux tronçons (10A,10B) de chemin de câbles de profil en U présentant de place en place des perforations (13), une première aile (21) et une seconde aile (22) de cette éclisse étant destinées à être appliquées contre respectivement le fond (11) et un flanc (12) du profilé (10) formé par lesdits tronçons mis bout à bout, ladite éclisse étant caractérisée en ce qu'elle comporte, d'une part, sur ladite seconde aile, au moins un moyen élastique (30) adapté à prendre appui sur ledit flanc lorsque cette seconde aile est amenée contre ce dernier, pour solliciter l'éclisse sensiblement en pivotement autour du bord libre (28) de ladite seconde aile, et d'autre part, sur la première aile, des moyens d'ancrage (25) agencés de manière à coopérer avec des perforations (13) desdits tronçons lorsque lesdites première et seconde ailes de l'éclisse sont appliquées contre respectivement ledit fond et ledit flanc.

2. Eclisse selon la revendication 1, caractérisé en ce que le moyen élastique (30) s'étend au niveau du bord libre (28) de la seconde aile (22) de ladite éclisse.

3. Eclisse selon la revendication 2, caractérisée en ce que ledit moyen élastique est une ailette (30), déformable élastiquement, prolongeant vers le haut au moins une partie centrale de la seconde aile (22) de l'éclisse (20), avec une certaine inclinaison par rapport à cette dernière, et en ce que les flancs latéraux des tronçons (10A,10B) présentent, le long de leurs bords libres, des rebords (14) en forme de crosse à l'intérieur desquels ladite ailette peut prendre appui.

4. Eclisse selon la revendication 2, caractérisée en ce que ledit moyen élastique est constitué par au moins une patte qui, partant du bord libre (28) de la seconde aile (22), est adaptée à pénétrer dans une perforation (13) du flanc (12) du profilé (10), ladite patte étant adaptée à prendre appui contre le flanc de ce dernier.

5. Eclisse selon la revendication 3, pour tronçons de chemin de câbles dont lesdits rebords (14) des flancs sont rabattus vers l'intérieur, caractérisée en ce que ladite ailette (30) est inclinée vers l'intérieur, pour, lorsque l'éclisse (20) est appliquée contre les faces intérieures du fond (11) et du flanc (12) du profilé (10), prendre appui sur la partie rabattue du rebord (14) dudit flanc.

6. Eclisse selon la revendication 3, pour chemins de câbles dont lesdits rebords des flancs sont rabattus vers l'extérieur, caractérisée en ce que ladite ailette est inclinée vers l'extérieur, pour, lorsque l'éclisse est appliquée contre les faces extérieures du fond et du flanc du profilé, prendre appui sur la partie rabattue du rebord dudit flanc.

7. Eclisse selon l'une quelconque des revendications précédentes, caractérisée en ce qu'elle est pourvue d'au moins un moyen de positionnement (34) adapté à pénétrer dans une perforation (13) du flanc (12) du profilé (10), de manière à ce que l'éclisse (20) soit correctement positionnée par rapport audit profilé (10).

8. Eclisse selon la revendication 7, caractérisée en ce que ledit moyen de positionnement (34) est formé sur le bord libre 28) de la seconde aile (22) et est adapté à prendre appui sur un bord de la perforation (13) correspondante, afin d'assurer que le mouvement de l'éclisse (20) lors de son montage soit bien sensiblement un mouvement de rotation autour du bord libre (28) de la seconde aile (22) de cette éclisse.

9. Eclisse selon la revendication 7 ou 8, caractérisée en ce que ledit moyen de positionnement est constitué d'une patte (34) dont une partie (35) s'étend vers le haut parallèlement à la seconde aile (22), à partir de l'extrémité d'une racine 36 qui, partant du bord libre (28) de ladite seconde aile, s'étend perpendiculairement à cette dernière, vers l'extérieur de l'éclisse.

10. Eclisse selon l'une quelconque des revendications précédentes, caractérisée en ce qu'elle est pourvue d'au moins un moyen de verrouillage secondaire (37), adapté à pénétrer dans une perforation (13) du flanc (12) de l'éclisse (20), afin d'assurer l'immobilisation de ladite éclisse en translation suivant la hauteur du flanc (12) du profilé (10).

11. Eclisse selon la revendication 10, caractérisée en ce que ledit moyen de verrouillage secondaire est constitué d'une lamelle (37) découpée dans la seconde aile (22), ses deux extrémités restant solidaires de cette dernière, puis emboutie de manière à faire saillie vers l'extérieur de l'éclisse.

12. Eclisse selon l'une quelconque des revendications précédentes, caractérisée en ce que ladite éclisse comporte au moins deux moyens d'ancrage (25), coopérant avec des perforations de respectivement l'un (10A) et l'autre (10B) tronçon.

13. Eclisse selon la revendication 12, caractérisée en ce que chacun desdits moyens d'ancrage est constitué par une pattes (25), s'étendant dans un plan sensiblement perpendiculaire à la deuxième aile (22), avec une certaine inclinaison vers le bas.
